# FASCICULE DE BREVET EUROPEEN

(11) **EP 2 838 928 B1**
(45) Date de publication et mention de la délivrance du brevet: **16.01.2019**
(21) Numéro de dépôt: 13724409.1
(22) Date de dépôt: 10.04.2013
(51) Int. Cl.: C08G 61/00, H01M 10/00

(54) **POLYMERE COMME MATERIAU D'ELECTRODE POUR DES BATTERIES SECONDAIRES AU LITHIUM**
POLYMER ALS ELEKTRODENMATERIAL FÜR LITHIUMSEKUNDÄRBATTERIEN
POLYMER SERVING AS AN ELECTRODE MATERIAL FOR LITHIUM SECONDARY BATTERIES

(30) Priorité: 16.04.2012 FR 1253488
(43) Date de publication de la demande: 25.02.2015
(73) Titulaire: Commissariat à l'Énergie Atomique et aux Énergies Alternatives, 75015 Paris (FR)
(72) Inventeur: GUTEL, Thibaut, F-95560 Montsoult (FR); KERVELLA, Yann, F-38160 Saint Verand (FR); PICARD, Lionel, 38170 Seyssinet-Pariset (FR); DENIS, Jean-Benoît, F-62500 Saint Martin Au Laert (FR)
(74) Mandataire: Nony
(86) Numéro de dépôt international: PCT/IB2013/052839
(87) Numéro de publication internationale: WO 2013/156899

(56) Documents cités:
- US-A1- 2001 024 738
- DATABASE WPI Week 200882 Thomson Scientific, London, GB; AN 2008-O10853 XP002683981, & JP 2008 282632 A (NIPPON KASEI KK) 20 novembre 2008 (2008-11-20)

## Description

La présente invention concerne le domaine des batteries secondaires au lithium. Elle a plus particulièrement pour objet l'utilisation de nouveaux polymères conducteurs électroniques comme matériau actif d'électrodes pour batteries secondaires au lithium, notamment pour des batteries lithium-ion.

Les batteries au lithium sont de plus en plus utilisées comme sources d'énergie autonome, en particulier dans les équipements portables, où ils remplacent progressivement les accumulateurs nickel-cadmium (NiCd) et nickel-hydrure métallique (NiMH). Cette évolution s'explique par l'amélioration continue des performances des accumulateurs au lithium, leur conférant ainsi des densités d'énergie nettement supérieures à celles proposées par les filières NiCd et NiMH. Les batteries au lithium trouvent de multiples applications, notamment dans les nouvelles technologies de l'information et de la communication (NTIC), des dispositifs médicaux, les véhicules électriques, le stockage de l'énergie de cellules photovoltaïques, etc..

Ces générateurs électrochimiques au lithium fonctionnent classiquement sur le principe d'insertion ou de désinsertion (ou intercalation-désintercalation) du lithium sur au moins une électrode. En particulier, dans un accumulateur lithium-ion, les cations Li⁺ font ainsi des allers-retours entre les électrodes, respectivement positive et négative, à chaque charge et décharge de l'accumulateur. Le matériau actif de l'électrode positive est capable de libérer des ions lithium au moment de la charge et d'incorporer des ions lithium au moment de la décharge.

D'une manière générale, les composés actifs d'électrodes utilisés dans les accumulateurs commerciaux sont, pour l'électrode positive, des composés lamellaires tels que LiCoO₂, LiNiO₂ et mixtes Li(Ni, Co, Mn, Al)O₂ ou des composés de structure spinelle de compositions proches de LiMn₂O₄. L'électrode négative est généralement du carbone (graphite, coke, etc.) ou éventuellement le spinelle Li₄Ti₅O₁₂ ou un métal formant un alliage avec le lithium (Sn, Si, etc.).

Pour répondre plus particulièrement aux nouveaux marchés de l'automobile hybride et électrique ou du solaire photovoltaïque, les contraintes de coût, de volume de production et de performances en puissance imposent la recherche de nouveaux matériaux actifs d'électrode.

Dans cette optique, des polymères ont déjà été proposés, par exemple dans les documents WO 2009/043729, WO 2009/127674 ou EP 1 244 168, comme matériaux actifs, pour leur propriété de conduction de l'électricité, en remplacement ou en complément de conducteurs électroniques classiques tels que le noir de carbone. Ils sont principalement utilisés pour leur facilité de mise en oeuvre, comparée aux suspensions de particules conductrices, et permettent d'améliorer la percolation électrique des matériaux actifs d'électrode.

Les polymères les plus couramment employés sont des polyanilines, des polypyrroles, des polymères présentant sur leur chaîne un composant portant un pont disulfide, ou encore des composés conducteurs de protons contenant au moins un hétérocycle avec un atome d'azote. Ces matériaux actifs sont principalement utilisés pour les batteries lithium-ion primaires, c'est-à-dire des batteries non rechargeables.

A titre d'exemple, le document US 7,651,647 propose la mise en oeuvre d'un mélange d'un matériau actif tel que l'oxyde de vanadium-argent ou du carbone fluoré et d'un polymère conducteur choisi parmi la polyaniline, le polydioxythiophène et leur combinaison, pour la fabrication d'une électrode positive d'une cellule électrochimique.

Par ailleurs, dans le cadre des matériaux actifs mis en oeuvre pour des batteries secondaires au lithium, il est décrit dans le document JP 2010-1802854 la préparation de polymères poly(méthylméthacrylate) greffés par des fonctions nitroxyde tels que des groupements 2,2,6,6-tétraméthyl-pipéridinyl-N-oxy (TEMPO).

On peut encore citer le document JP 2008-192452 qui décrit l'utilisation, comme matériaux actifs d'électrodes, de polymères conducteurs formés à partir de monomères présentant des cycles hétéroaromatiques à cinq chaînons, en particulier des polythiophènes porteurs de radicaux TEMPO ou dérivés. Ces polymères sont synthétisés par greffage du motif TEMPO sur les monomères, suivi de la polymérisation.

US 2001/024738 concerne des copolymères électroactifs comprenant un segment polymérique de transport de charges et un segment polymérique émettant de la lumière, pour leur utilisation dans des dispositifs opto-électroniques (D1, paragraphe [0006]). Des dérivés de "TEMPO" peuvent être mis en oeuvre comme initiateurs de polymérisation radicalaire. JP 2008 282632 concerne des polymères a squelette linéaire polynorbornène greffés par des groupements TEMPO.

Toutefois, l'utilisation de ces polymères greffés dans des batteries secondaires au lithium nécessite la mise en oeuvre conjointe d'importantes quantités de conducteurs électroniques classiques, tels que du noir de carbone, généralement entre 20 % et 70 % en poids, afin de permettre l'extraction des électrons du matériau actif. L'ajout de telles quantités de conducteurs électroniques se fait malheureusement au détriment de la densité d'énergie massique ou volumique de l'électrode, et rend toute application industrielle fortement onéreuse. Par ailleurs, l'utilisation de liants complémentaires est nécessaire pour assurer l'adhérence du matériau polymère sur le collecteur de courant et une bonne tenue mécanique de l'électrode. Enfin, d'une manière générale, ces polymères greffés sont formés par greffage des fonctions nitroxyde sur les monomères, préalablement à la polymérisation, ce qui rend les étapes réactionnelles délicates et conduisent à des mauvais rendements.

La présente invention selon les revendications 1 à 19 vise à proposer de nouveaux polymères utilisables comme matériau d'électrode pour des batteries secondaires au lithium, et permettant notamment de pallier les inconvénients précités.

Plus particulièrement, elle concerne, selon un premier de ses aspects, un polymère possédant un squelette linéaire choisi parmi les homopolymères appartenant à la famille des polyfluorènes, des polycarbazoles, des polyanilines, des polyphénylènes, des polyisothionaphtènes, des polyacétylènes, des polyphénylènevinylènes, et leurs copolymères, ledit squelette étant porteur d'au moins un groupement latéral possédant au moins une fonction nitroxyde.

Au sens de la présente invention, le terme « latéral » signifie que ledit groupement est disposé de manière à figurer un groupement pendant ou encore « un greffon » au niveau du squelette linéaire. Dans la suite du texte, on parlera indifféremment de « groupement latéral » ou de « greffon ». Les polymères de l'invention, présentant lesdits groupements latéraux sont désignés, indifféremment par la suite, par les expressions « polymères greffés » ou « polymères fonctionnalisés » par lesdits groupements. Sauf indication contraire, on parlera plus simplement des « groupements latéraux » ou « greffons » pour désigner les groupements latéraux possédant au moins une fonction nitroxyde.

De tels polymères greffés conducteurs électroniques s'avèrent particulièrement avantageux comme matériau actif d'électrodes pour des batteries secondaires au lithium, les fonctions nitroxyde greffées assurant la complexation réversible des ions Li⁺.

Par « fonction nitroxyde », on entend désigner la forme radicalaire NO˙.

Ainsi, l'invention concerne également, selon un autre de ses aspects, l'utilisation de tels polymères comme matériau d'électrode. Elle porte également sur un tel matériau d'électrode et sur l'électrode ainsi formée.

La mise en oeuvre des polymères greffés selon l'invention comme matériau d'électrode s'avère avantageuse à plusieurs titres.

Tout d'abord, les électrodes formées selon l'invention peuvent être utilisées pour la production de batteries au lithium présentant des temps de charge et de recharge très courts (de l'ordre de 1 à 10 minutes), et pourront donc être avantageusement mises en oeuvre pour obtenir un courant fort en un temps court.

Par ailleurs, elles présentent une bonne flexibilité et légèreté, propriétés particulièrement recherchées dans le cadre de la mise en oeuvre des électrodes dans des systèmes portables.

D'autre part, l'utilisation des polymères de l'invention pour former des électrodes efficaces dans des dispositifs de batteries secondaires au lithium ne nécessite pas la mise en oeuvre de conducteurs électroniques additionnels et permet donc de réduire la quantité de tels conducteurs électroniques additionnels, voire de s'en affranchir totalement.

Egalement, de manière avantageuse, les polymères de l'invention peuvent agir à la fois comme extracteurs de charges vers le collecteur de courant de l'électrode, mais également comme liants. De fait, la mise en oeuvre des polymères selon l'invention permet de réduire la quantité de liants additionnels à introduire, voire de s'affranchir totalement de l'utilisation de liants annexes.

Enfin, comme développé par la suite, il est possible de préparer les polymères greffés de l'invention en procédant au greffage des groupements porteurs d'une ou plusieurs fonctions nitroxyde directement sur les polymères non fonctionnalisés déjà formés. Ce mode de préparation est particulièrement avantageux, comparativement au procédé usuellement mis en oeuvre dans lequel le greffage est effectué sur les monomères avant polymérisation, et conduit à des rendements réactionnels améliorés, ce qui permet d'optimiser le procédé de préparation du matériau d'électrode et donc les étapes de fabrication des électrodes et des cellules électrochimiques résultantes.

D'autres caractéristiques, variantes et avantages des polymères selon l'invention, de leur préparation et de leur mise en oeuvre ressortiront mieux à la lecture de la description, des exemples et figures qui vont suivre, donnés à titre illustratif et non limitatif de l'invention.

Dans la suite du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

### POLYMERE

Comme précisé ci-dessus, les polymères selon l'invention possèdent un squelette linéaire choisi parmi les homopolymères appartenant à la famille des polyfluorènes, des polycarbazoles, des polyanilines, des polyphénylènes, des polyisothionaphtènes, des polyacétylènes, des polyphénylènevinylènes, et leurs copolymères.

Selon un mode de réalisation particulièrement préféré, ledit squelette linéaire est choisi parmi les homopolymères appartenant à la famille des polyfluorènes et des polycarbazoles, et leurs copolymères.

Il peut s'agir en particulier d'un squelette linéaire formé en tout ou partie d'un polyfluorène.

Selon un mode de réalisation particulier, les polymères de l'invention présentent un squelette linéaire formé d'un polyfluorène.

Selon une caractéristique essentielle de l'invention, les polymères de l'invention présentent des groupements latéraux, encore appelés greffons, possédant au moins une fonction nitroxyde (NO).

Selon un mode de réalisation particulier, les polymères selon l'invention présentent un potentiel d'électroactivité compatible avec le potentiel d'oxydoréduction de la fonction nitroxyde. Par « potentiel d'électroactivité » du polymère, on entend le potentiel auquel la réaction de dopage correspondant à la création d'une charge négative pour le dopage n ou positive pour le dopage p, délocalisée sur plusieurs motifs de monomères, a lieu. Cette réaction est réversible (possibilité de dédopage) et améliore fortement la conductivité électronique du polymère.

Les groupements latéraux porteurs d'au moins une fonction nitroxyde peuvent présenter l'une des structures (G1) à (G8) suivantes : 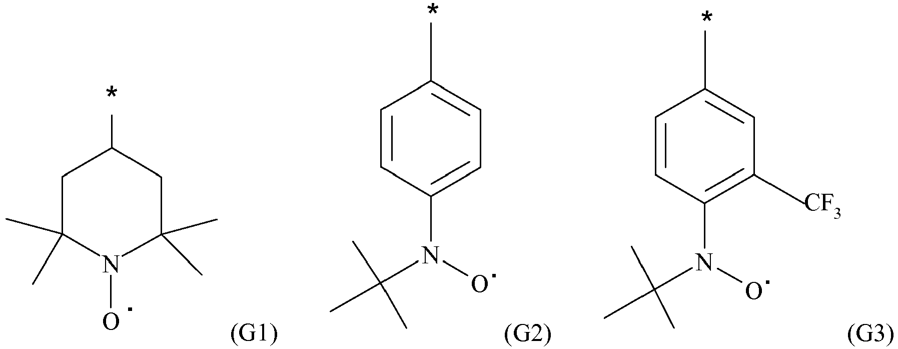 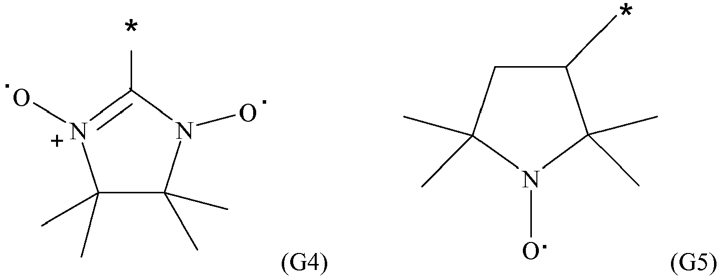 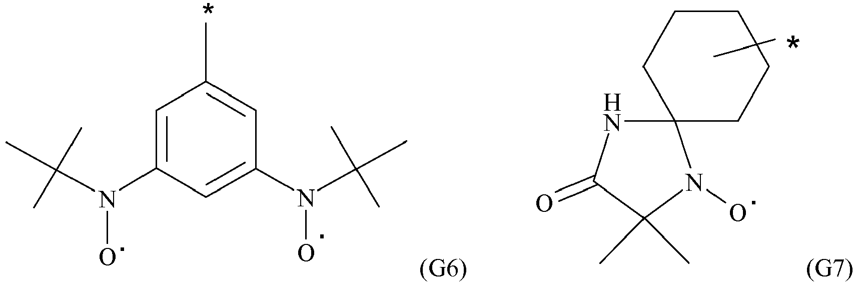 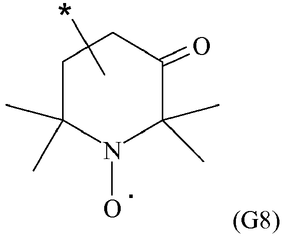 avec * figurant la localisation du site de liaison audit squelette linéaire.

Les greffons portés par un polymère selon l'invention peuvent être identiques ou différents.

Selon un mode de réalisation particulier, au moins une partie, voire la totalité, desdits groupements latéraux possèdent au moins deux fonctions nitroxyde, en particulier possèdent deux fonctions nitroxyde.

Il peut s'agir par exemple de greffons présentant les structures (G4) et (G6) précitées.

L'homme du métier est à même de choisir la nature des greffons à mettre en oeuvre, notamment au regard du nombre de fonctions nitroxyde par greffon, pour obtenir le taux de greffage molaire en fonctions nitroxyde dudit polymère souhaité.

De préférence, les polymères selon l'invention présentent un taux de greffage molaire en fonctions nitroxyde allant de 1 à 800 %, de préférence de 50 à 200 %.

Selon un autre mode de réalisation particulier, au moins une partie, voire la totalité, desdits groupements latéraux présente la structure 2,2,6,6-tétraméthylpipéridinyl-N-oxy (structure (G1) représentée ci-dessus), encore appelée TEMPO.

Selon un mode de réalisation particulièrement préféré, les polymères selon l'invention présentent la structure générale (I) suivante : 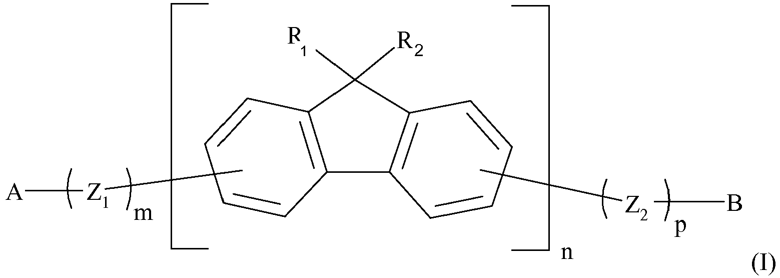 dans laquelle :
- A et B représentent, indépendamment l'un de l'autre, un atome d'hydrogène, un atome d'halogène en particulier de brome, une fonction acétylénique (par exemple éthynyle), une fonction acide boronique (-B(OH)₂) ou borane (par exemple pinacolborane (-B(O₂C₂H₄))), une fonction stannique (par exemple -SnR₃, avec R représentant un alkyl), un groupement zincique (par exemple -ZnX avec X étant un halogène) ou un groupement magnésien (par exemple -MgX avec X étant un atome d'halogène) ;
- -(Z₁)ₘ- et -(Z₂)ₚ- représentent l'enchaînement d'un ou plusieurs monomères choisi(s) parmi les monomères carbazole, aniline, phénylène, isothionaphtène, acétylène et phénylènevinylène ; -(Z₁)ₘ- étant en position 5, 6, 7 ou 8 du fluorène, -(Z₂)ₚ- étant en position 1, 2, 3 ou 4 du fluorène ;
- l'un au moins des R₁ et R₂ représente *-Y(G)ₜ, avec :
   * représentant une liaison covalente avec le fluorène ; t étant égal à 1 ou 2 ;
   si t est égal à 1, Y représente une liaison covalente ; un groupe (C₁-C₅)alkyl linéaire ou ramifié, saturé ou insaturé, éventuellement interrompu par un ou plusieurs hétéroatome(s) tels que S, O, N ou par une ou plusieurs fonctions éther, ester ou amide ; -O- ; -COO- ou -CONH ;
   si t est égal à 2, Y représente un groupe (C₁-C₅)alkyl linéaire ou ramifié, saturé ou insaturé éventuellement interrompu par un ou plusieurs hétéroatome(s) tels que S, O, N ou par une ou plusieurs fonctions éther, ester ou amide ; -O- ; -COO- ou -CONH- ;
   G représentant un groupement possédant au moins une fonction nitroxyde, en particulier choisi parmi les structures (G1) à (G8) définies précédemment ;
- l'autre des R₁ et R₂ représente *-Y(G)ₜ identique ou différent, ou un atome d'hydrogène ;
- m et p représentent des entiers allant de 0 à 50000 ; et
- n représente un entier allant de 1 à 50000, sous réserve que lorsque n=1, au moins l'un des m et p est différent de 0.

Selon un mode de réalisation particulier, R₁ représente un groupement *-Y(G)ₜ avec t étant égal à 1, Y représentant une liaison covalente, et G étant choisi parmi les structures (G1) à (G8) définies ci-dessus, en particulier représentant un groupement TEMPO (structure (G1)).

Plus particulièrement, les polymères de l'invention peuvent être des polyfluorènes porteurs de groupements latéraux possédant au moins une fonction nitroxyde.

De préférence, ils répondent à la formule (I) précitée dans laquelle A et B représentent, indépendamment l'un de l'autre, un atome d'hydrogène ou un atome d'halogène, en particulier de brome ; R₁ représente un groupement *-Y(G)ₜ avec t étant égal à 1 ; Y représentant une liaison covalente, et G étant choisi parmi les structures (G1) à (G8) telles que définies précédemment, en particulier (G1) ; R₂ représente H ; m et p valent 0 et n est un entier allant de 2 à 50000.

De tels polymères peuvent plus particulièrement présenter un degré de polymérisation allant de 5 à 5000, de préférence de 10 à 100.

A titre d'exemples de polyfluorènes conformes à l'invention, on peut plus particulièrement citer les polymères de formule (I') suivante : 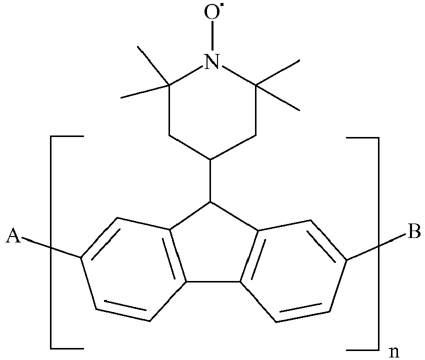 dans laquelle A et B sont tels que définis précédemment, et n va de 5 à 5000, de préférence de 10 à 100.

Selon un mode de réalisation particulier, les polymères de l'invention peuvent être réticulés.

Par « polymères réticulés », on entend au sens de l'invention des polymères résultant de l'utilisation, lors de la polymérisation, d'un agent réticulant ou ramifiant, c'est-à-dire présentant plusieurs fonctions polymérisables, préférentiellement bifonctionnalisés.

Selon encore un autre mode de réalisation particulier, les polymères de l'invention peuvent comporter, outre lesdits groupements latéraux possédant une ou plusieurs fonctions nitroxyde, un ou plusieurs groupements latéraux additionnels, comme par exemple, des groupements (C₁-C₅)alkyl linéaires ou ramifiés, saturés ou insaturés, éventuellement interrompus par un ou plusieurs hétéroatome(s) tels que S, O, N ou par une ou plusieurs fonctions éther, ester ou amide ; -O- ; -COO- ou -CONH.

### Procédés de préparation des polymères de l'invention

Les polymères selon l'invention peuvent être préparés selon deux voies alternatives :
- formation du polymère préalablement au greffage desdits groupements latéraux ; ou
- fonctionnalisation des monomères par lesdits groupements latéraux, préalablement à la formation du polymère par polymérisation desdits monomères fonctionnalisés.

Plus précisément, selon une première variante de réalisation particulièrement préférée, les polymères selon l'invention peuvent être préparés selon un procédé comprenant au moins les étapes consistant en :
(a) disposer d'un polymère choisi parmi les homopolymères appartenant à la famille des polyfluorènes, polycarbazoles, polyanilines, polyphénylènes, polyisothionaphtènes, polyacétylènes, polyphénylènevinylènes et leurs copolymères ; et
(b) mettre en présence ledit polymère avec une entité possédant au moins une fonction nitroxyde, dans des conditions propices à leur interaction et à la formation du polymère fonctionnalisé attendu.

Cette première variante est illustrée en exemples 3 ou 4 (polymérisation des monomères non fonctionnalisés) et en exemple 5.

Le polymère de l'étape (a) peut être préparé, préalablement à sa mise en oeuvre dans le procédé de l'invention, selon des méthodes de polymérisation connues de l'homme du métier.

Contre toute attente, les inventeurs ont découvert qu'il était possible d'obtenir les polymères fonctionnalisés selon cette première voie de synthèse, avec de rendements de synthèse élevés.

Un tel procédé est d'autant plus surprenant que l'on craint habituellement que les sites de greffage sur des polymères déjà formés ne puissent pas être accessibles pour opérer un greffage convenable.

A titre d'exemple, les polymères de structure (I) telle que définie précédemment peuvent être préparés selon un procédé comprenant la mise en présence d'un polymère présentant la structure (II) suivante : 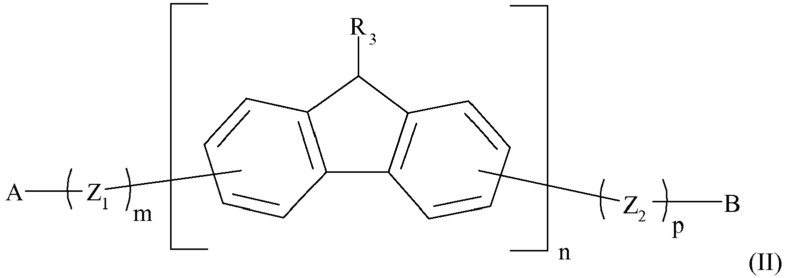
dans laquelle A, B, Z₁, Z₂, m, n et p sont tels que définis précédemment ;
avec au moins un composé de formule X-Y(G)ₜ, dans laquelle Y, G et t sont tels que définis en revendication 8 ou 9 ; et
   - soit X représente un groupe partant, en particulier une fonction halogène, un groupement mésylate ou tosylate ; et R₃ représente H ;
   - soit X et R₃ représentent des groupements aptes à interagir ensemble, en présence d'un catalyseur métal de transition, selon une réaction de couplage, pour former une liaison C-C ;
dans des conditions propices à l'obtention de la structure (I) telle que définie précédemment.

Par exemple, les polymères de formule (I') définie précédemment peuvent être plus particulièrement préparés par greffage de composés de formule : 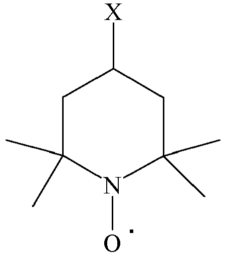 dans laquelle X représente un groupe partant, en particulier une fonction halogène, un groupement mésylate ou tosylate ;
sur un polyfluorène de formule (II') : 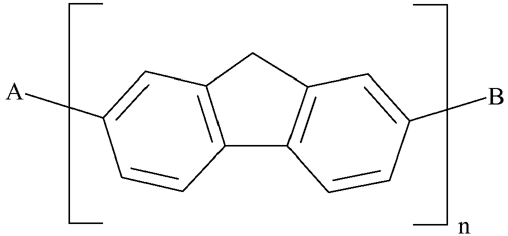 dans laquelle A, B et n sont tels que définis précédemment.

Selon une variante particulière du procédé de l'invention, le greffage des groupements selon l'invention sur ledit polymère peut être réalisé *via* une réaction de couplage entre lesdits substituants R₃ et X pour conduire à la formation d'une liaison C-C, en présence d'un catalyseur de type métal de transition.

Plus particulièrement, l'un des substituants X et R₃ peut représenter un atome d'halogène, l'autre des X et R₃ représentant une fonction borane, acide borique, stannique ou zincique, ladite réaction de couplage étant catalysée par un complexe de palladium.

Selon un mode de réalisation particulier, l'un des X et R₃ représente un halogène, l'autre représentant une fonction borane ou acide borique, la réaction de couplage étant réalisée en présence d'un complexe du palladium (réaction connue sous l'appellation « couplage de Suzuki »).

Selon un autre mode de réalisation particulier, l'un des X et R₃ représente un halogène, l'autre représentant une fonction stannique, la réaction de couplage étant réalisée en présence d'un complexe du palladium (réaction connue sous l'appellation « couplage de Stille »).

Selon encore un autre mode de réalisation particulier, l'un des X et R₃ représente un halogène, l'autre représentant une fonction zincique, la réaction de couplage étant réalisée en présence d'un complexe du palladium (réaction connue sous l'appellation « couplage de Negishi »).

Selon un autre mode de réalisation particulier, les polymères selon l'invention peuvent être préparés selon un procédé comprenant au moins les étapes consistant en :
(c) disposer de monomères porteurs d'au moins un groupement possédant au moins une fonction nitroxyde, lesdits monomères étant choisis dans la famille des fluorènes, carbazoles, anilines, phénylènes, isothionaphtènes, acétylènes, phénylènevinylènes et leurs mélanges ; et
(d) (co)polymériser lesdits monomères pour obtenir ledit polymère fonctionnalisé attendu.

Les monomères de l'étape (c) peuvent être préparés préalablement par des méthodes de greffage connues de l'homme du métier, comme illustré en exemple 2.

Cette seconde variante de procédé est illustrée en exemple 2 et exemples 3 ou 4 (polymérisation des monomères préalablement fonctionnalisés).

En particulier, les polymères de structure (I) telle que définie précédemment peuvent être préparés par polymérisation de monomères de formule (III) suivante : 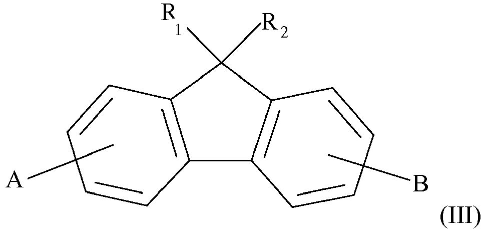 dans laquelle R₁, R₂, A et B sont tels que définis précédemment, A étant en position 5, 6, 7 ou 8 du fluorène, B étant en position 1, 2, 3 ou 4 du polyfluroène pour former un polymère de structure (I) telle que définie ci-dessus.

A titre d'exemple, les polymères de formule (I') définie précédemment peuvent être préparés par polymérisation de monomères de formule (III') : 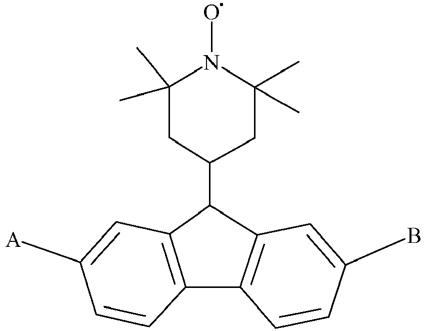 dans laquelle A et B sont tels que définis précédemment.

Bien entendu, il appartient à l'homme du métier d'ajuster les conditions de synthèse pour obtenir les polymères greffés selon l'invention.

### ELECTRODE

Comme précisé précédemment, le polymère selon l'invention peut être mis en oeuvre comme matériau actif d'électrode.

Selon un autre de ses aspects, l'invention concerne ainsi un matériau actif d'électrode comprenant au moins un polymère tel que défini précédemment.

Le matériau d'électrode peut être préparé sous la forme d'une poudre.

Le matériau d'électrode peut comprendre un polymère ou mélange de polymères selon l'invention. Il peut comprendre, outre le ou lesdits polymères de l'invention, un ou plusieurs composés additionnels classiquement mis en oeuvre, comme par exemple un liant ou un additif conducteur.

Selon encore un autre de ses aspects, l'invention concerne une électrode comprenant un matériau d'électrode tel que décrit précédemment.

De préférence, le matériau d'électrode représente de 5 à 100 % en poids du poids total de l'électrode, en particulier plus de 70 % en poids, et plus particulièrement de 80 à 100 % en poids, par rapport au poids total de ladite électrode.

Une électrode selon l'invention peut être utilisée comme électrode positive ou comme électrode négative, en particulier d'un générateur au lithium.

De manière classique, une électrode selon l'invention peut comporter un collecteur de courant sur laquelle est appliqué ledit matériau actif d'électrode, par exemple *via* les techniques développées ci-dessous.

Par exemple, de l'aluminium ou de l'acier inoxydable peuvent être utilisés comme collecteur de courant pour une électrode positive ; et du cuivre, du nickel ou de l'acier, traités en une feuille découpée, un métal en mousse ou une plaque de feuille laminé, par exemple, peuvent être utilisés comme collecteur de courant pour une électrode négative.

Selon un mode de réalisation particulier, l'électrode peut comprendre en outre un ou plusieurs additif(s) conducteur(s) électronique(s) et/ou un ou plusieurs liant(s).

Le ou lesdits additifs conducteurs électroniques peuvent être choisis parmi des fibres de carbone, du noir de carbone, des nanotubes de carbone et leurs analogues.

Selon un mode de réalisation préféré, le ou lesdits additifs conducteurs électroniques peuvent être présents en une quantité inférieure ou égale à 20 % en poids par rapport au poids total de ladite électrode, de préférence inférieure ou égale à 10 % en poids, et plus particulièrement inférieure ou égale à 5 % en poids, par rapport au poids total de ladite électrode.

De préférence, l'électrode peut être exempte d'additif conducteur électronique.

Selon un autre mode de réalisation particulier, l'électrode peut comprendre en outre un ou plusieurs liant(s).

De tels liants peuvent être choisi(s) parmi des liants fluorés, en particulier parmi le polytétrafluoroéthylène, le polyfluorure de vinylidène, les polysaccharides ou les latex notamment de type caoutchouc styrène-butadiène (SBR ou en langue anglaise « styrene-butadiene rubber »).

Selon un mode de réalisation préféré, le ou lesdits liants peuvent être présents en une quantité inférieure ou égale à 50 % en poids, par rapport au poids total de l'électrode, de préférence inférieure ou égale à 20 % en poids, notamment inférieure ou égale à 10 % en poids, et plus particulièrement inférieure ou égale à 5 % en poids, par rapport au poids total de l'électrode.

En particulier, une électrode selon l'invention peut comprendre moins de 10 % en poids de liants fluorés, en particulier moins de 5 % en poids de liants fluorés, par rapport au poids total de l'électrode.

De préférence, une électrode selon l'invention est exempte de liant.

Une électrode peut en outre comprendre d'autres additifs couramment mis en oeuvre pour des électrodes de batteries secondaires au lithium.

### Procédé de préparation de l'électrode

Une électrode selon l'invention peut être préparée suivant différentes techniques.

Selon une première variante de réalisation, l'électrode selon l'invention peut être formée par un procédé de préparation d'une électrode telle que définie précédemment, comprenant au moins les étapes consistant en :
(i) disposer d'un mélange formé d'au moins un matériau d'électrode tel que défini précédemment, d'une phase liquide en particulier comprenant un ou plusieurs solvants organiques ou aqueux, et éventuellement d'un ou plusieurs additif(s) conducteur(s) électronique(s) et/ou liant(s) ; et
(ii) déposer ledit mélange de l'étape (i) par enduction ou par une technique d'impression sur un substrat de base.

La dispersion de l'étape (i), lorsqu'elle est aqueuse, peut également comporter un épaississant, par exemple de type carboxy méthylcellulose, hydroxypropyle méthylcellulose, et/ou un surfactant et/ou un sel (LiOH par exemple). Une telle dispersion est également couramment appelée « encre ». L'encre peut par exemple être déposée selon l'étape (ii) sur un collecteur de courant, tel qu'une feuille métallique, par exemple en aluminium.

Le dépôt de l'encre peut par exemple être réalisé par flexographie, héligravure, sérigraphie, jet d'encre ou spray. L'homme du métier est à même d'ajuster les conditions de mise en oeuvre de ces différentes techniques.

Selon un mode de réalisation particulier, le substrat de base peut être un film polymérique de type polyéthylène ou polypropylène, l'étape (ii) du dépôt de l'encre étant alors suivi d'une étape ultérieure (iii) de décollage dudit film polymérique, pour former une électrode autosupportée.

Selon une seconde variante de réalisation, l'électrode peut être formée par électropolymérisation *in situ* en solution. Une couche formée de polymères selon l'invention peut être plus particulièrement formée par électropolymérisation des monomères fonctionnalisés directement sur un collecteur de courant, tel que, par exemple, une feuille d'aluminium, de nickel, de cuivre, d'acier ou de carbone, le cas échéant en présence de conducteurs électroniques additionnels.

L'invention concerne ainsi, selon un autre de ses aspects, un procédé de préparation d'une électrode telle que définie précédemment, comprenant la formation dudit polymère par électropolymérisation *in situ* sur un collecteur de courant, de monomères porteurs d'au moins un groupement possédant au moins une fonction nitroxyde, lesdits monomères étant choisis dans la famille des fluorènes, carbazoles, anilines, phénylènes, isothionaphtènes, acétylènes, phénylènevinylènes et leurs mélanges.

Selon une variante particulièrement préféré, l'électropolymérisation a lieu directement au sein d'une cellule électrochimique au lithium. Dans cette configuration, l'électropolymérisation a lieu lors du premier cycle de charge (ou décharge) de la cellule et l'électrode se forme *in situ* sur le collecteur de l'électrode positive (ou négative respectivement).

Plus particulièrement, le procédé de formation de l'électrode par électropolymérisation *in situ* peut comprendre au moins les étapes consistant en :
(iv) mettre en solution lesdits monomères fonctionnalisés dans une solution d'électrolyte d'une cellule électrochimique au lithium ; et
(v) effectuer au moins un cycle de charge de la cellule pour former une électrode positive, ou au moins un cycle de décharge de la cellule pour former une électrode négative.

La solution d'électrolyte peut être choisie parmi les électrolytes classiquement mis en oeuvre pour des batteries au lithium, au travers desquels les cations Li⁺ ont la possibilité de migrer. L'électrolyte peut, par exemple, être constitué par un sel comportant au moins le cation Li⁺. Le sel est, par exemple, choisi parmi LiClO₄, LiAsF₆, LiPF₄, LiBF₄, LiR_{F}SO₃, LiCH₃SO₃, LiN(R_{F}SO₂)₂, LiN(R_{F}SO₂)₃; R_{F} étant choisi parmi un atome de fluor et un groupement perfluoroalkyle comportant entre 1 et 8 atomes de carbone. Le sel est, de préférence, dissous dans un solvant polaire aprotique tel que le carbonate d'éthylène, le carbonate de propylène, le carbonate de diméthyle, le carbonate d'éthylméthyle ; et il peut être supporté par un élément séparateur disposé entre les première et seconde électrodes, l'élément séparateur étant alors imbibé d'électrolyte.

D'autres méthodes de formation d'une électrode selon l'invention sont également envisageables, notamment :
- par mise en oeuvre des polymères de l'invention en solution : solubilisation du matériau actif selon l'invention dans un solvant, éventuellement en présence de conducteurs électroniques additionnels, et dépôt de la solution par une technique classique, par exemple choisie parmi les techniques d'impression (flexographie, héligravure, sérigraphie, jet d'encre, spray ...), drop casting, dip-coating, tournette. La mise en oeuvre en solution facilite le dépôt sur des collecteurs souples du type polymère avec un dépôt métallique ou tissus carbonés ; ou encore
- par mise en oeuvre des polymères de l'invention à l'état fondu : injection, extrusion, rotomoulage par exemple, éventuellement en présence de conducteurs électroniques additionnels. Dans le cas de l'extrusion, l'extrudat se présentera sous forme de jonc qui sera appliqué sur le collecteur de courant par compression (presse isostatique, calandrage, ...) ou préférentiellement sous forme de film qui sera déposé à l'état fondu directement sur un collecteur conducteur électrique (Al, de Ni, de Cu, acier, carbone...).

### BATTERIE SECONDAIRE AU LITHIUM

Comme évoqué précédemment, une électrode formée à partir du matériau d'électrode selon l'invention s'avère particulièrement avantageuse pour ce qui est de son utilisation dans les batteries secondaires au lithium.

Ainsi, la présente invention se rapporte à une batterie secondaire au lithium comprenant une électrode selon l'invention.

Il peut s'agir d'une batterie lithium-ion, lithium-polymère, lithium-soufre, lithium-air ou supercondensateur.

Selon un mode de réalisation particulier, une électrode selon l'invention est mise en oeuvre dans une batterie lithium-ion.

Le reste de la batterie peut être formée selon des méthodes conventionnelles. De manière générale, les batteries lithium-ion présentent une architecture avec deux électrodes (une électrode positive et une électrode négative), toutes les deux revêtues sur un collecteur de courant conducteur électrique, disposées de part et d'autre d'un séparateur organique ou inorganique. Les deux techniques de montage de cette architecture actuellement les plus utilisées sont le bobinage (enroulement des différents constituants dans une géométrie cylindrique ou prismatique) et le stack (empilement couche par couche des différents éléments). Bien entendu, d'autres techniques de montage pour former une batterie sont envisageables, telles que les techniques de l'impression.

L'électrode selon l'invention peut constituer l'électrode positive ou l'électrode négative de la batterie. De préférence, elle constituera l'électrode positive.

L'invention va maintenant être décrite au moyen des exemples et figures suivantes.

Ces exemples et ces figures sont bien entendu donnés à titre illustratif et non limitatif de l'invention.

### FIGURES

Figure 1 : Spectre infrarouge du TEMPO-mésylate (formé selon l'exemple 1.c.), du polyfluorène et du polyflurorène greffé TEMPO formée selon l'exemple 3 ;
Figure 2 : Voltampéromètre cyclique du polyfluorène greffé TEMPO.

### EXEMPLES

Dans l'ensemble des exemples qui suivent, l'appellation « TEMPO » est utilisée pour désigner un groupement

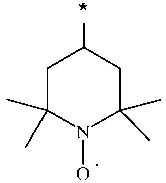

### EXEMPLE 1

### Préparation du TEMPO fonctionnalisé par un groupe partant

### Exemple l.a. : chloration du TEMPO

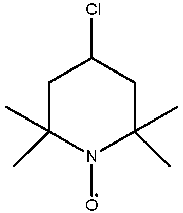

L'hydroxy-TEMPO est introduit dans un ballon sous atmosphère d'argon et dissout dans le dichlorométhane. 1 équivalent de base (triéthylamine) puis de chlorure de thionyle sont introduits au goutte à goutte. Ce mélange est agité à 45°C pendant 24 heures. La solution est ensuite lavée avec de l'eau puis avec de la saumure et enfin séchée sur sulfate de magnésium. Après filtration, le solvant est évaporé sous vide.

### Exemple l.b. : bromation du TEMPO

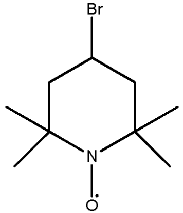

L'hydroxy-TEMPO est introduit dans un ballon sous atmosphère d'argon et dissout dans le chloroforme. 1 équivalent de PBr₃ est introduit au goutte à goutte. Ce mélange est agité à 65°C pendant 24 heures. La solution est ensuite lavée avec de l'eau puis avec de la saumure et enfin séchée sur sulfate de magnésium. Après filtration, le solvant est évaporé sous vide.

### Exemple 1.c. : fonctionnalisation du TEMPO par un groupement mésylate ou tosylate

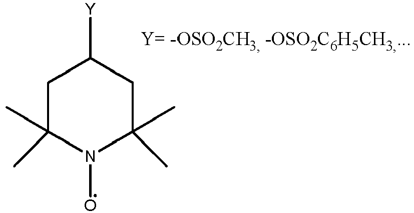

L'hydroxy-TEMPO est introduit dans un ballon sous atmosphère d'argon et dissout dans le dichlorométhane. 1,1 équivalent de base (triéthylamine) sont ajoutés au milieu réactionnel à 0°C puis 1 équivalent de chlorure de méthane- ou toulenesulfonyl est introduit au goutte à goutte. Ce mélange est agité à 25°C pendant 24 heures. La solution est ensuite lavée avec de l'eau, avec une solution aqueuse d'hydrogénocarbonate de sodium et enfin avec de la saumure puis séchée sur sulfate de magnésium. Après filtration, le solvant est évaporé sous vide.

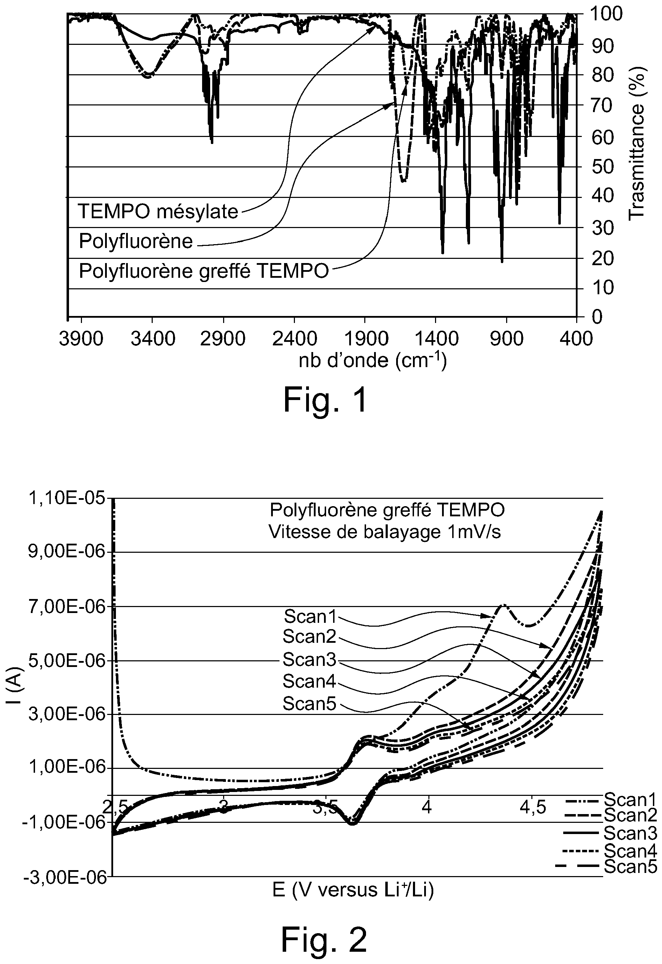

Le spectre infrarouge du TEMPO-mésylate obtenu est représenté en figure 1.

### EXEMPLE 2

### Préparation des monomères fluorène fonctionnalisés par le TEMPO

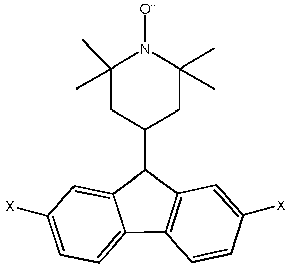

Le fluorène ou le 2,7-dibromofluorène est introduit dans un ballon sous atmosphère d'argon et dissout dans le THF. 4 équivalents de base (K₂CO₃ ou NaH) sont introduits. 1 équivalent de TEMPO fonctionnalisé (TEMPO mésylate ou halogéno-TEMPO) est ensuite dissout dans le THF puis cette solution est ajoutée au goutte à goutte au milieu réactionnel. Le mélange est introduit dans l'eau, extrait à l'éther puis séché sur sulfate de magnésium. Le produit est ensuite séché sous vide.

### EXEMPLE 3

### Polymérisation des monomères fluorène, préalablement fonctionnalisés ou non par des greffons TEMPO

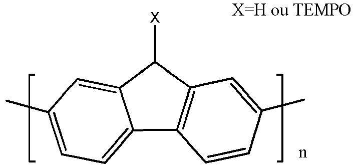

Le fluorène ou le fluorène greffé TEMPO est introduit dans un ballon sous atmosphère d'argon et dissout dans le chloroforme. Le chlorure de fer (III) (5 équivalents) en solution dans le nitrométhane est ensuite ajouté au goutte à goutte au milieu réactionnel à - 78°C. Ce mélange est agité à 25°C pendant 70 heures puis ensuite introduit au goutte à goutte dans du méthanol sous forte agitation. De l'hydrazine (10 équivalents) et de l'acide éthylènediaminetétraacétique (10 équivalents) sont ajoutés à la solution et le mélange réactionnel est agité pendant 24 heures. La suspension est ensuite filtrée puis lavée avec de l'eau et du méthanol. Une extraction en Soxhlet est ensuite réalisée avec de l'acétone puis le produit est dissout dans 100 mL de chloroforme et séché sur sulfate de magnésium. Le solvant est ensuite évaporé sous vide.

Les spectres infrarouge du polyfluorène et du polyfluorène greffé TEMPO sont représentés en figure 1.

### EXEMPLE 4

### Polymérisation des monomères dibromofluorènes, préalablement fonctionnalisés ou non par des greffons TEMPO

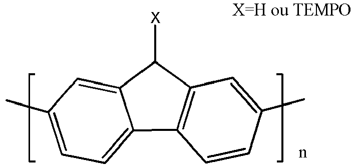

Le 2,7-dibromofluorène ou le 2,7-dibromofluorène greffé TEMPO est introduit dans un ballon sous atmosphère d'argon et dissout dans le DMF. La poudre de zinc (4 équivalents) ainsi que le Ni(COD)₂ (10 % mol) sont ensuite ajoutés au milieu réactionnel à -78°C. Ce mélange est agité à 25°C pendant 70 heures puis filtrée et lavé avec du méthanol en présence d'acide éthylènediaminetétraacétique (10 équivalents). La suspension est ensuite filtrée puis lavée au méthanol, à l'acide chlorhydrique et enfin à l'eau. La poudre obtenue est dissoute dans le chloroforme, séchée sur sulfate de magnésium puis précipitée dans le méthanol, filtrée et séchée sous vide.

### EXEMPLE 5

### Greffage du TEMPO sur le polyfluorène

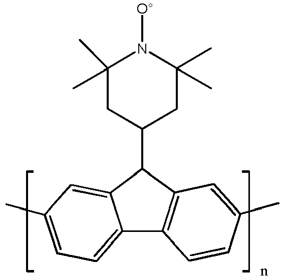

Le polyfluorène est introduit dans un ballon sous atmosphère d'argon et dissout dans le THF. L'hydrure de sodium (4 équivalents) est ensuite ajouté et ce mélange est agité à 25°C pendant 2 heures. 1 équivalent de TEMPO fonctionnalisé (TEMPO mésylate ou halogéno-TEMPO) est ensuite dissout dans le THF puis cette solution est ajoutée au goutte à goutte au milieu réactionnel et agité pendant 24 heures. Le mélange est introduit dans l'eau, extrait à l'éther et lavé à la saumure puis séché sur sulfate de magnésium. Le produit est ensuite séché sous vide et reprécipité dans le méthanol.

### EXEMPLE 6

### Voltampérométrie cyclique du polyfluorène greffé TEMPO

En boite à gants sous atmosphère d'argon, le polyfluorène greffé TEMPO est introduit dans 2 mL d'une solution à 1 mol/L d'hexafluorophosphate de lithium dans un mélange de carbonate d'éthylène, de propylène et de diméthylcarbonate en proportion volumique 1/1/3. 5 balayages à une vitesse de 1 mV/s entre 2,5 et 4,7 V sont réalisés.

### EXEMPLE 7

### Mise en oeuvre du polyfluorène greffé TEMPO

Afin de déterminer les performances électrochimiques du matériau d'électrode selon l'invention, un accumulateur lithium-métal de type "pile bouton" est réalisé avec :
- une électrode négative de lithium sous forme d'un disque de 16 mm de diamètre et de 130 µm d'épaisseur et déposée sur un disque en inox servant de collecteur de courant ;
- une électrode positive constituée d'un disque de 14 mm de diamètre prélevé sur un film composite de 50 µm d'épaisseur comprenant le matériau composite de l'invention préparé selon l'exemple 1 déposé sur un collecteur de courant en aluminium (feuille de 20 micromètres d'épaisseur) ; et
- un séparateur imbibé d'un l'électrolyte liquide à base du sel LiPF₆ (1 mol/L) en solution dans un mélange de carbonate de propylène et de carbonate de diméthyle.

A 20 °C, sous un régime de C/10 (régime d'une charge et d'une décharge en 10 heures), ce système permet d'extraire la majeure partie du lithium présent dans le matériau d'électrode positive.

## Revendications

1. Polymère possédant un squelette linéaire choisi parmi les homopolymères appartenant à la famille des polyfluorènes, des polycarbazoles, des polyanilines, des polyphénylènes, des polyisothionaphtènes, des polyacétylènes, des polyphénylènevinylènes, et leurs copolymères,
ledit squelette étant porteur d'au moins un groupement latéral possédant au moins une fonction nitroxyde sous forme radicalaire NO˙.

2. Polymère selon la revendication 1, ledit polymère étant réticulé.

3. Polymère selon la revendication 1 ou 2, ledit squelette linéaire étant choisi parmi les homopolymères appartenant à la famille des polyfluorènes et des polycarbazoles, et leurs copolymères.

4. Polymère selon l'une quelconque des revendications 1 à 3, dans lequel le ou lesdits groupements latéraux porteurs d'au moins une fonction nitroxyde présente(nt) l'une des structures suivantes: 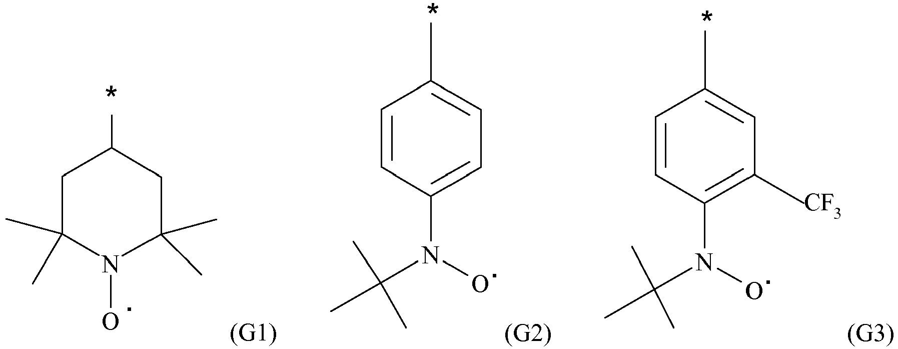 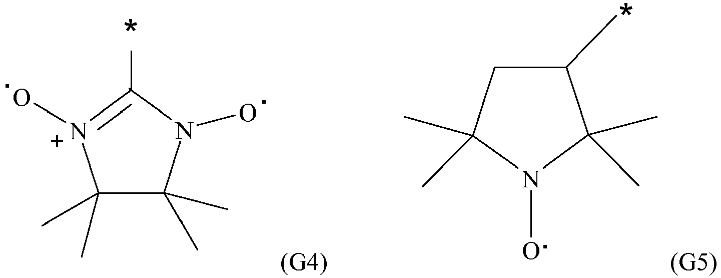 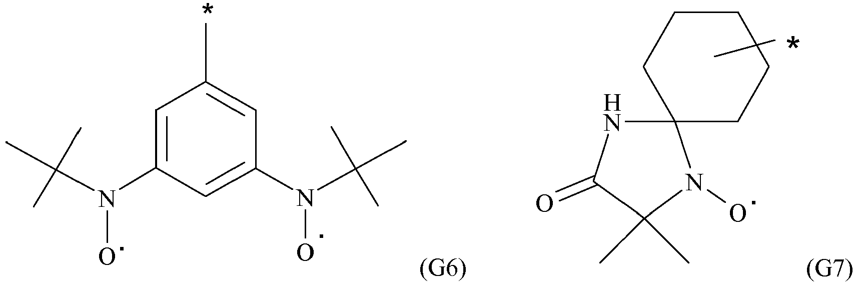 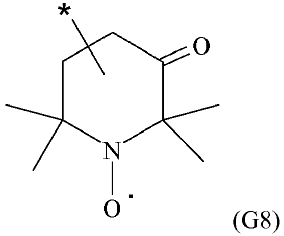 avec * figurant la localisation du site de liaison audit squelette linéaire.

5. Polymère selon l'une quelconque des revendications précédentes, dans lequel au moins une partie, voire la totalité, desdits groupements latéraux présente la structure 2,2,6,6-tétraméthylpipéridinyl-N-oxy.

6. Polymère selon l'une quelconque des revendications précédentes, possédant un squelette linéaire formé en tout ou partie d'un polyfluorène.

7. Polymère selon l'une quelconque des revendications précédentes, présentant la structure (I) suivante : 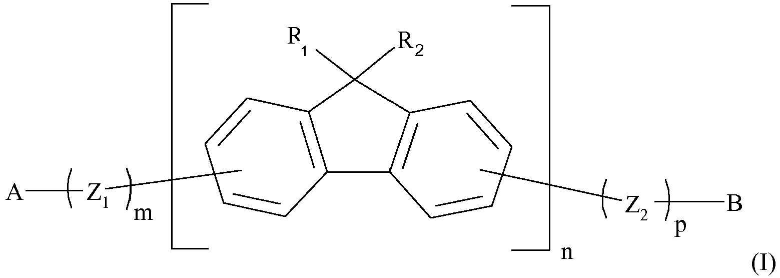 dans laquelle :
- A et B représentent, indépendamment l'un de l'autre, un atome d'hydrogène, un atome d'halogène en particulier de brome, une fonction acétylénique, une fonction acide boronique ou borane, une fonction stannique, un groupement zincique ou un groupement magnésien ;
- -(Z₁)ₘ- et -(Z₂)ₚ- représentent l'enchaînement d'un ou plusieurs monomères choisi(s) parmi les monomères carbazole, aniline, phénylène, isothionaphtène, acétylène et phénylènevinylène ; -(Z₁)ₘ- étant en position 5, 6, 7 ou 8 du fluorène, -(Z₂)ₚ- étant en position 1, 2, 3 ou 4 du fluorène ;
- l'un au moins des R₁ et R₂ représente *-Y(G)ₜ, avec :
* représentant une liaison covalente avec le fluorène ; t étant égal à 1 ou 2 ;
si t est égal à 1, Y représente une liaison covalente ; un groupe (C₁-C₅)alkyl linéaire ou ramifié, saturé ou insaturé, éventuellement interrompu par un ou plusieurs hétéroatome(s) tels que S, O, N ou par une ou plusieurs fonctions éther, ester ou amide ; -O- ; -COO- ou -CONH ;
si t est égal à 2, Y représente un groupe (C₁-C₅)alkyl linéaire ou ramifié, saturé ou insaturé éventuellement interrompu par un ou plusieurs hétéroatome(s) tels que S, O, N ou par une ou plusieurs fonctions éther, ester ou amide ; -O- ; -COO- ou -CONH- ;
G représentant un groupement possédant au moins une fonction nitroxyde sous forme radicalaire NO˙, en particulier choisi parmi les structures (G1) à (G8) telles que définies en revendication 4 ;
- l'autre des R₁ et R₂ représente *-Y(G)ₜ identique ou différent, ou un atome d'hydrogène ;
- m et p représentent des entiers allant de 0 à 50000 ; et
- n représente un entier allant de 1 à 50000, sous réserve que lorsque n=1, au moins l'un des m et p est différent de 0.

8. Polymère selon la revendication précédente, présentant la structure (I) dans laquelle A et B représentent, indépendamment l'un de l'autre, un atome d'hydrogène ou un atome d'halogène, en particulier de brome ; R₁ représente un groupement *-Y(G)ₜ avec t égal à 1, Y représentant une liaison covalente, et G étant choisi parmi les structures (G1) à (G8) telles que définies en revendication 4, en particulier (G1) ; R₂ représente H ; m et p valent 0 et n est un entier allant de 2 à 50000, en particulier allant de 5 à 5000 et plus particulièrement de 10 à 100.

9. Polymère selon l'une quelconque des revendications précédentes, ledit polymère présentant un taux de greffage molaire en fonctions nitroxyde sous forme radicalaire NO˙ allant de 1 à 800 %, en particulier de 50 à 200 %.

10. Procédé de préparation d'un polymère tel que défini selon l'une quelconque des revendications 1 à 9, comprenant au moins les étapes consistant en :
(a) disposer d'un polymère choisi parmi les homopolymères appartenant à la famille des polyfluorènes, polycarbazoles, polyanilines, polyphénylènes, polyisothionaphtènes, polyacétylènes, polyphénylènevinylènes et leurs copolymères ; et
(b) mettre en présence ledit polymère avec une entité possédant au moins une fonction nitroxyde sous forme radicalaire NO˙, dans des conditions propices à leur interaction et à la formation du polymère fonctionnalisé attendu.

11. Procédé selon la revendication 10, comprenant au moins la mise en présence d'un polymère présentant la structure (II) suivante : 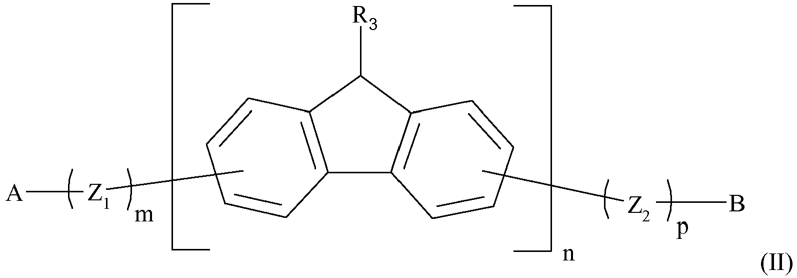
dans laquelle A, B, Z₁, Z₂, m, n et p sont tels que définis en revendication 7 ou 8 ;
avec au moins un composé de formule X-Y(G)ₜ, dans laquelle Y, G et t sont tels que définis en revendication 7 ou 8 ; et
- soit X représente un groupe partant, en particulier une fonction halogène, un groupement mésylate ou tosylate ; et R₃ représente H ;
- soit X et R₃ représentent des groupements aptes à interagir ensemble, en présence d'un catalyseur métal de transition, selon une réaction de couplage, pour former une liaison C-C ;
en particulier l'un des X et R₃ représente un atome d'halogène, l'autre des X et R₃ représentant une fonction borane, acide borique, stannique ou zincique, ladite réaction de couplage étant catalysée par un complexe de palladium ;
dans des conditions propices à l'obtention de la structure (I) telle que définie en revendication 7 ou 8.

12. Procédé de préparation d'un polymère tel que défini selon l'une quelconque des revendications 1 à 9, comprenant au moins les étapes consistant en :
(c) disposer de monomères porteurs d'au moins un groupement possédant au moins une fonction nitroxyde sous forme radicalaire NO˙, lesdits monomères étant choisis dans la famille des fluorènes, carbazoles, anilines, phénylènes, isothionaphtènes, acétylènes, phénylènevinylènes et leurs mélanges ; et
(d) (co)polymériser lesdits monomères pour obtenir ledit polymère fonctionnalisé attendu.

13. Procédé selon la revendication 12, comprenant au moins la polymérisation de monomères de formule (III) suivante : 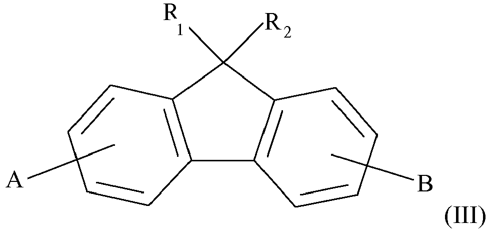 dans laquelle R₁, R₂, A et B sont tels que définis en revendication 7 ou 8, A étant en position 5, 6, 7 ou 8 du fluorène, B étant en position 1, 2, 3 ou 4 du polyfluroène pour former un polymère de structure (I) telle que définie en revendication 7 ou 8.

14. Utilisation d'un polymère tel que défini selon l'une quelconque des revendications 1 à 9 comme matériau actif d'électrode.

15. Matériau actif d'électrode comprenant au moins un polymère tel que défini selon l'une quelconque des revendications 1 à 9.

16. Electrode comprenant un matériau d'électrode tel que défini en revendication 15.

17. Procédé de préparation d'une électrode telle que définie en revendication 16, comprenant au moins les étapes consistant en :
(i) disposer d'un mélange formé d'au moins un matériau d'électrode tel que défini en revendication 15, d'une phase liquide, en particulier comprenant un ou plusieurs solvants organiques ou aqueux, et éventuellement d'un ou plusieurs additif(s) conducteur(s) électronique(s) et/ou liant(s) ; et
(ii) déposer ledit mélange de l'étape (i) par enduction ou par une technique d'impression sur un substrat de base, en particulier ledit substrat de base étant un film polymérique de type polyéthylène ou polypropylène, ledit procédé comprenant une étape ultérieure (iii) de décollage dudit film polymérique, pour former une électrode autosupportée.

18. Procédé de préparation d'une électrode telle que définie en revendication 16, comprenant la formation dudit polymère par l'électropolymérisation *in situ* sur un collecteur de courant, des monomères porteurs d'au moins un groupement possédant au moins une fonction nitroxyde sous forme radicalaire NO˙, lesdits monomères étant choisis dans la famille des fluorènes, carbazoles, anilines, phénylènes, isothionaphtènes, acétylènes, phénylènevinylènes et leurs mélanges.

19. Batterie secondaire au lithium comprenant une électrode selon la revendication 16, ladite batterie étant notamment une batterie lithium-ion, lithium-polymère, lithium-soufre, lithium-air ou supercondensateur, en particulier une batterie lithium-ion.

## Patentansprüche

1. Polymer mit einer linearen Hauptkette, ausgewählt aus Homopolymeren aus der Familie der Polyfluorene, Polycarbazole, Polyaniline, Polyphenylene, Polyisothionaphthene, Polyacetylene, Polyphenylenvinylene und Copolymeren davon,
wobei die Hauptkette mindestens eine Seitengruppe mit mindestens einer Nitroxidfunktion in radikalischer NO˙-Form trägt.

2. Polymer nach Anspruch 1, wobei das Polymer vernetzt ist.

3. Polymer nach Anspruch 1 oder 2, wobei die lineare Hauptkette aus Homopolymeren aus der Familie der Polyfluorene und Polycarbazole und Copolymeren davon ausgewählt ist.

4. Polymere nach einem der Ansprüche 1 bis 3, wobei die Seitengruppe bzw. die Seitengruppen mit mindestens einer Nitroxidfunktion eine der folgenden Strukturen aufweist bzw. aufweisen: 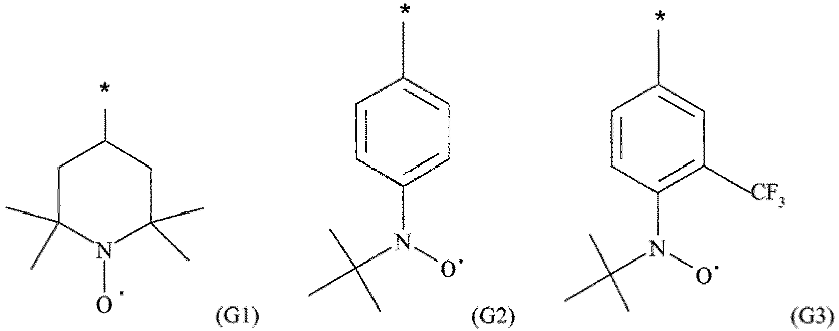 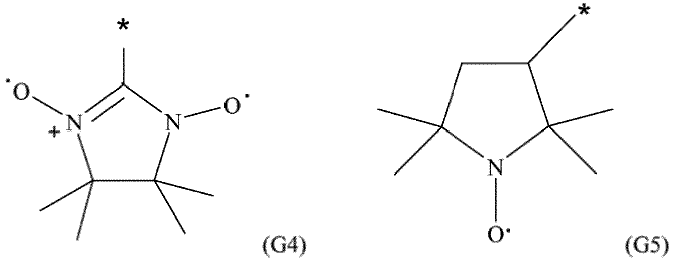 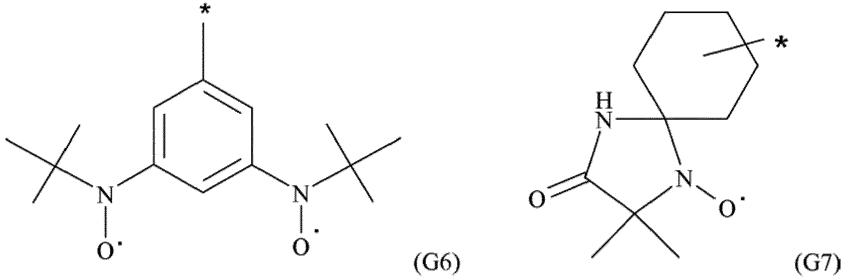 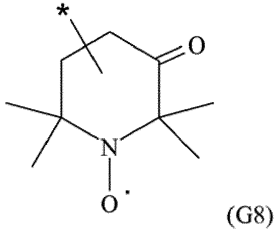 wobei * die Position der Anbindungsstelle an die Hauptkette anzeigt.

5. Polymer nach einem der vorhergehenden Ansprüche, wobei mindestens ein Teil oder sogar alle der Seitengruppen die Struktur 2,2,6,6-Tetramethylpiperidinyl-N-oxy aufweisen.

6. Polymer nach einem der vorhergehenden Ansprüche mit einer linearen Hauptkette, die ganz oder teilweise aus einem Polyfluoren gebildet ist.

7. Polymer nach einem der vorhergehenden Ansprüche mit der folgenden Struktur (I): 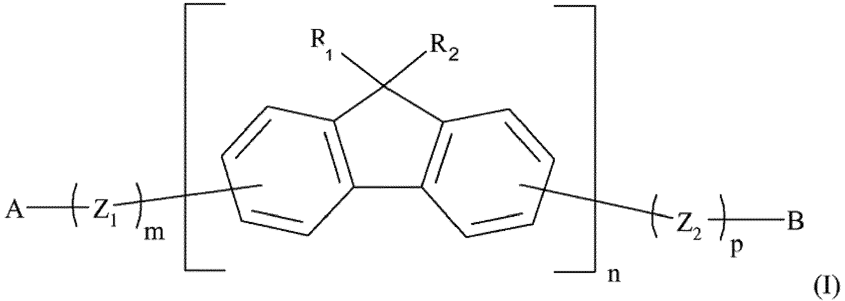 wobei:
- A und B unabhängig voneinander für ein Wasserstoffatom, ein Halogenatom, insbesondere Brom, eine Acetylenfunktion, eine Boronsäure- oder Boranfunktion, eine Zinn(IV)-Funktion, eine zinkhaltige Gruppe oder eine magnesiumhaltige Gruppe stehen;
- -(Z₁)ₘ- und -(Z₂)ₚ- für die Verkettung eines oder mehrerer Monomere, die aus Carbazol-, Anilin-, Phenylen-, Isothionaphthen-, Acetylenen- und Phenylenvinylen-Monomeren ausgewählt sind, stehen; wobei -(Z₁)ₘ- in Position 5, 6, 7 oder 8 des Fluorens steht, wobei -(Z₂)ₚ- in Position 1, 2, 3 oder 4 des Fluorens steht;
- mindestens eine der Variablen R₁ und R₂ für *-Y(G)ₜ steht, wobei:
* für eine kovalente Bindung mit dem Fluoren steht; t gleich 1 oder 2 ist;
dann, wenn t gleich 1 ist, Y für eine kovalente Bindung, eine lineare oder verzweigte, gesättigte oder ungesättigte (C₁-C₅)Alkylgruppe, die gegebenenfalls durch ein oder mehrere Heteroatome wie S, 0 oder N oder durch eine oder mehrere Ether-, Ester- oder Amidfunktionen unterbrochen ist, -O-, -COO- oder -CONH steht;
dann, wenn t gleich 2 ist, Y für eine lineare oder verzweigte, gesättigte oder ungesättigte (C₁-C₅)Alkylgruppe, die gegebenenfalls durch ein oder mehrere Heteroatome wie S, 0 oder N oder durch eine oder mehrere Ether-, Ester- oder Amidfunktionen unterbrochen ist, -0-, -COO- oder -CONH- steht;
G für eine Gruppe mit mindestens einer Nitroxidfunktion in radikalischer NO˙-Form steht, die insbesondere aus den Strukturen (G1) bis (G8) gemäß Anspruch 4 ausgewählt ist;
- die andere der Variablen R₁ und R₂ für gleiches oder verschiedenes *-Y(G)ₜ oder ein Wasserstoffatom steht;
- m und p für ganze Zahlen im Bereich von 0 bis 50.000 stehen; und
- n für eine ganze Zahl im Bereich von 1 bis 50.000 steht, mit der Maßgabe, dass im Fall von n = 1 mindestens eine der Variablen m und p von 0 verschieden ist.

8. Polymer nach dem vorhergehenden Anspruch mit der Struktur (I), wobei A und B unabhängig voneinander für ein Wasserstoffatom oder ein Halogenatom, insbesondere Brom, stehen; R₁ für eine Gruppe *-Y(G)ₜ steht, wobei t gleich 1 ist, Y für eine kovalente Bindung steht und G aus den Strukturen (G1) bis (G8) gemäß Anspruch 4, insbesondere (G1), ausgewählt ist; R₂ für H steht; m und p den Wert 0 haben und n für eine ganze Zahl im Bereich von 2 bis 50.000, insbesondere im Bereich von 5 bis 5000 und spezieller von 10 bis 100 steht.

9. Polymer nach einem der vorhergehenden Ansprüche, wobei das Polymer einen molaren Pfropfungsgrad an Nitroxidfunktionen in radikalischer NO˙-Form im Bereich von 1 bis 800 %, insbesondere von 50 bis 200 %, aufweist.

10. Verfahren zur Herstellung eines Polymers gemäß einem der Ansprüche 1 bis 9, das mindestens die Schritte umfasst, die aus Folgendem bestehen:
(a) Bereitstellen eines aus Homopolymeren aus der Familie der Polyfluorene, Polycarbazole, Polyaniline, Polyphenylene, Polyisothionaphthene, Polyacetylene, Polyphenylenvinylene und Copolymeren davon ausgewählten Polymers; und
(b) Inkontaktbringen des Polymers mit einer Einheit mit mindestens einer Nitroxidfunktion in radikalischer NO˙-Form unter Bedingungen, die für deren Wechselwirkung und die Bildung des erwarteten funktionalisierten Polymers günstig sind.

11. Verfahren nach Anspruch 10, umfassend mindestens das Inkontaktbringen eines Polymers mit der folgenden Struktur (II): 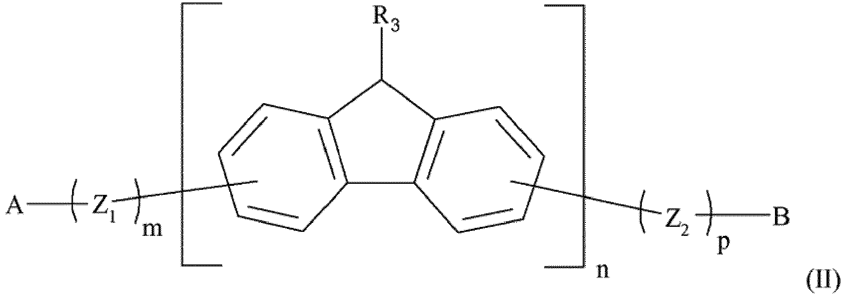
wobei A, B, Z₁, Z₂, m, n und p wie in Anspruch 7 oder 8 definiert sind;
mit mindestens einer Verbindung der Formel X-Y(G)ₜ,
wobei Y, G und t wie in Anspruch 7 oder 8 definiert sind; und
- entweder X für eine Abgangsgruppe, insbesondere eine Halogenfunktion, oder eine Mesylat- oder Tosylatgruppe steht; und R₃ für H steht;
- oder X und R₃ für Gruppen stehen, die in Gegenwart eines Übergangsmetallkatalysators gemäß einer Kupplungsreaktion unter Bildung einer C-C-Bindung miteinander wechselwirken können;
insbesondere eine der Variablen X und R₃ für ein Halogenatom steht und die andere der Variablen X und R₃ für eine Boranfunktion, Borsäurefunktion, Zinn(IV)-Funktion oder zinkhaltige Funktion stehen, wobei die Kupplungsreaktion durch einen Palladiumkomplex katalysiert wird;
unter Bedingungen, die für den Erhalt der Struktur (I) gemäß Anspruch 7 oder 8 günstig sind.

12. Verfahren zur Herstellung eines Polymers gemäß einem der Ansprüche 1 bis 9, das mindestens die Schritte umfasst, die aus Folgendem bestehen:
(c) Bereitstellen von Monomeren, die mindestens eine Gruppe mit mindestens einer Nitroxidfunktion in radikalischer NO˙-Form tragen, wobei die Monomere aus der Familie der Fluorene, Carbazole, Aniline, Phenylene, Isothionaphthene, Acetylene, Phenylenvinylene und Mischungen davon ausgewählt werden; und
(d) (Co)polymerisieren der Monomere zu dem erwarteten funktionalisierten Polymer.

13. Verfahren nach Anspruch 12, umfassend mindestens die Polymerisation der Monomere der folgenden Formel (III): 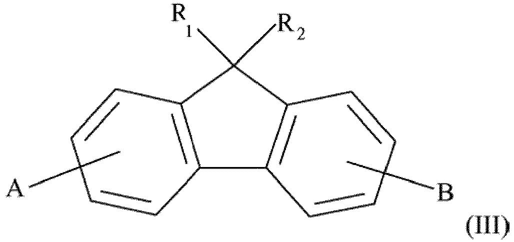 wobei R₁, R₂, A und B wie in Anspruch 7 oder 8 definiert sind, wobei A in Position 5, 6, 7 oder 8 des Fluorens steht, wobei B in Position 1, 2, 3 oder 4 des Polyfluorens steht, zu einem Polymer der Struktur (I) gemäß Anspruch 7 oder 8.

14. Verwendung eines Polymers gemäß einem der Ansprüche 1 bis 9 als Elektrodenaktivmaterial.

15. Elektrodenaktivmaterial, umfassend mindestens ein Polymer gemäß einem der Ansprüche 1 bis 9.

16. Elektrode, umfassend ein Elektrodenmaterial gemäß Anspruch 15.

17. Verfahren zur Herstellung einer Elektrode gemäß Anspruch 16, das mindestens die Schritte umfasst, die aus Folgendem bestehen:
(i) Bereitstellen einer aus mindestens einem Elektrodenmaterial gemäß Anspruch 15, einer flüssigen Phase, die insbesondere ein oder mehrere organische oder wässrige Lösungsmittel umfasst, und gegebenenfalls einem oder mehreren elektronenleitenden Additiven und/oder Bindemitteln gebildeten Mischung; und
(ii) Abscheiden der Mischung aus Schritt (i) durch Beschichten oder durch eine Drucktechnik auf einem Basissubstrat, wobei es sich bei dem Basissubstrat insbesondere um eine Polymerfolie vom Polyethylen- oder Polypropylen-Typ handelt, wobei das Verfahren einen anschließenden Schritt (iii) der Ablösung der Polymerfolie zur Bildung einer selbsttragenden Elektrode umfasst.

18. Verfahren zur Herstellung einer Elektrode gemäß Anspruch 16, umfassend Bildung des Polymers durch in-situ-Elektropolymerisation von Monomeren, die mindestens eine Gruppe mit mindestens einer Nitroxidfunktion in radikalischer NO˙-Form tragen, wobei die Monomere aus der Familie der Fluorene, Carbazole, Aniline, Phenylene, Isothionaphthene, Acetylene, Phenylenvinylene und Mischungen davon ausgewählt werden, auf einem Stromsammler.

19. Lithium-Sekundärbatterie, umfassend eine Elektrode nach Anspruch 16, wobei es sich bei der Batterie im Besonderen um eine Lithium-Ionen-, Lithium-Polymer-, Lithium-Schwefel-, Lithium-Luft- oder Superkondensatorbatterie, insbesondere eine Lithium-Ionen-Batterie, handelt.

## Claims

1. A polymer possessing a linear backbone selected from the homopolymers belonging to the family of polyfluorenes, polycarbazoles, polyanilines, polyphenylenes, polyisothionaphthenes, polyacetylenes, polyphenylene vinylenes, and copolymers thereof, said backbone bearing at least one side group possessing at least one nitroxide function in NO' radical form.

2. The polymer as claimed in claim 1, said polymer being crosslinked.

3. The polymer as claimed in claim 1 or 2, said linear backbone being selected from the homopolymers belonging to the family of polyfluorenes and polycarbazoles, and copolymers thereof.

4. The polymer as claimed in any one of claims 1 to 3, wherein said side group(s) bearing at least one nitroxide function has (have) one of the following structures: 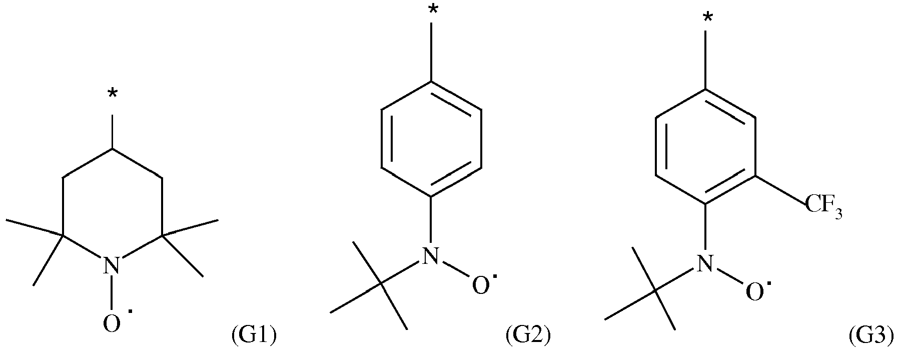 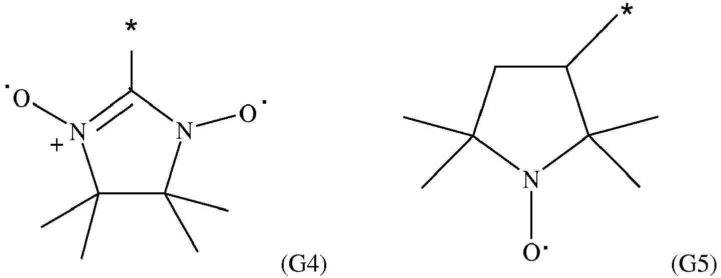 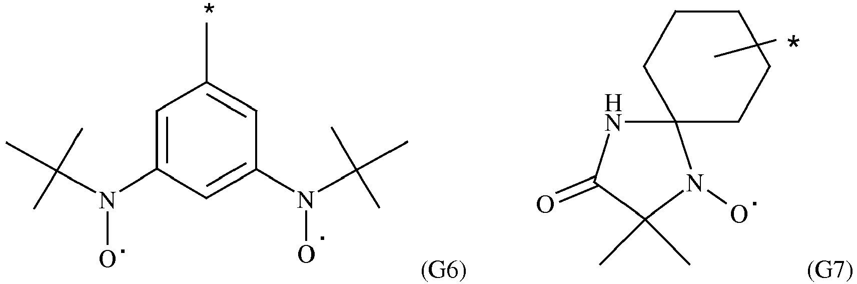 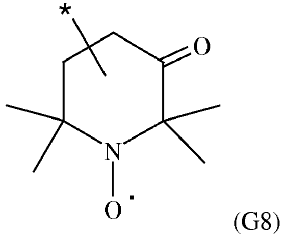 with * depicting the location of the site of bonding to said linear backbone.

5. The polymer as claimed in any one of the preceding claims, wherein at least one portion, or even all, of said side groups has the structure 2,2,6,6-tetramethylpiperidinyl-N-oxy.

6. The polymer as claimed in any one of the preceding claims, possessing a linear backbone formed completely or partly from a polyfluorene.

7. The polymer as claimed in any one of the preceding claims, having the structure (I) below: 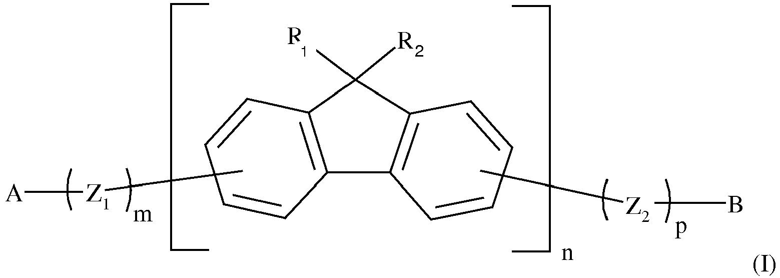 wherein:
- A and B represent, independently of one another, a hydrogen atom, a halogen atom, in particular bromine, an acetylenic function, a boronic acid or borane function, a stannic function, a zincic group or a magnesian group;
- -(Z₁)ₘ- and -(Z₂)ₚ- represent the sequence of one or more monomers selected from carbazole, aniline, phenylene, isothionaphthene, acetylene and phenylene vinylene monomers; -(Z₁)ₘ- being at position 5, 6, 7 or 8 of the fluorene, -(Z₂)ₚ- being at position 1, 2, 3 or 4 of the fluorene;
- at least one of R₁ and R₂ represents *-Y(G)ₜ, with:
* representing a covalent bond with the fluorene ; t being equal to 1 or 2;
if t is equal to 1, Y represents a covalent bond; a linear or branched, saturated or unsaturated (C₁-C₅)alkyl group, optionally interrupted by one or more heteroatom(s) such as S, O or N or by one or more ether, ester or amide functions; -O-; -COO- or -CONH;
if t is equal to 2, Y represents a linear or branched, saturated or unsaturated (C₁-Cs)alkyl group, optionally interrupted by one or more heteroatom(s) such as S, O or N or by one or more ether, ester or amide functions; -O-; -COO- or -CONH;
G representing a group possessing at least one nitroxide function in NO' radical form, in particular selected from the structures (G1) to (G8) as defined in claim 4;
- the other one of R₁ and R₂ represents *-Y(G)ₜ, which may be identical or different, or a hydrogen atom;
- m and p represent integers ranging from 0 to 50 000; and
- n represents an integer ranging from 1 to 50 000, on condition that when n=1, at least one of m and p is other than 0.

8. The polymer as claimed in the preceding claim, having the structure (I) wherein A and B represent, independently of one another, a hydrogen atom or a halogen atom, in particular bromine; R₁ represents a *-Y(G)ₜ group with t equal to 1, Y representing a covalent bond, and G being selected from the structures (G1) to (G8) as defined in claim 4, in particular (G1); R₂ represents H; m and p are equal to 0 and n is an integer ranging from 2 to 50 000, in particular ranging from 5 to 5000 and more particularly from 10 to 100.

9. The polymer as claimed in any one of the preceding claims, said polymer having a molar degree of grafting of nitroxide functions in NO' radical form ranging from 1% to 800%, in particular from 50% to 200%.

10. A process for preparing a polymer as defined in any one of claims 1 to 9, comprising at least the steps consisting of:
(a) providing a polymer selected from the homopolymers belonging to the family of polyfluorenes, polycarbazoles, polyanilines, polyphenylenes, polyisothionaphthenes, polyacetylenes, polyphenylene vinylenes, and copolymers thereof; and
(b) bringing said polymer into contact with an entity possessing at least one nitroxide function in NO' radical form, under conditions conducive to the interaction thereof and to the formation of the expected functionalized polymer.

11. The process as claimed in claim 10, comprising at least bringing a polymer having the structure (II) below: 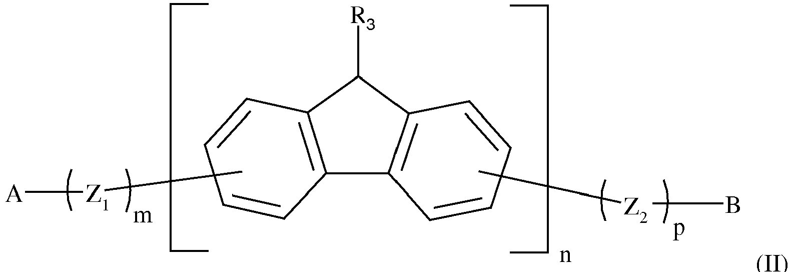
wherein A, B, Z₁, Z₂, m, n and p are as defined in claim 7 or 8;
into contact with at least one compound of formula X-Y(G)ₜ, wherein Y, G and t are as defined in claim 7 or 8; and
- either X represents a leaving group, in particular a halogen function, or a mesylate or tosylate group; and R₃ represents H;
- or X and R₃ represent groups capable of interacting together, in the presence of a transition metal catalyst, according to a coupling reaction, in order to form a C-C bond;
in particular one of X and R₃ represents a halogen atom, the other one of X and R₃ representing a borane, boric acid, stannic or zincic function, said coupling reaction being catalysed by a palladium complex;
under conditions conducive to obtaining the structure (I) as defined in claim 7 or 8.

12. The process for preparing a polymer as defined in any one of claims 1 to 9, comprising at least the steps consisting of:
(c) providing monomers bearing at least one group possessing at least one nitroxide function in NO' radical form, said monomers being selected from the family of fluorenes, carbazoles, anilines, phenylenes, isothionaphthenes, acetylenes and phenylene vinylenes and mixtures thereof; and
(d) (co)polymerizing said monomers in order to obtain said expected functionalized polymer.

13. The process as claimed in claim 12, comprising at least the polymerization of monomers of formula (III) below: 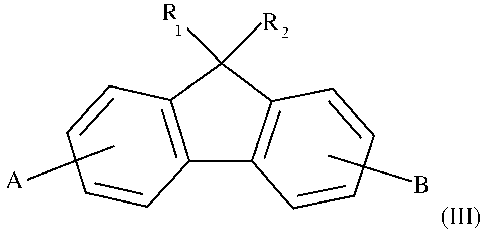 wherein R₁, R₂, A and B are as defined in claim 7 or 8, A being at position 5, 6, 7 or 8 of the fluorene, B being at position 1, 2, 3 or 4 of the polyfluorene in order to form a polymer of structure (I) as defined in claim 7 or 8.

14. The use of a polymer as defined in any one of claims 1 to 9 as electrode active material.

15. An electrode active material comprising at least one polymer as defined in any one of claims 1 to 9.

16. An electrode comprising an electrode material as defined in claim 15.

17. A process for preparing an electrode as defined in claim 16, comprising at least the steps consisting of :
(i) providing a mixture formed of at least one electrode material as defined in claim 15, of a liquid phase, in particular comprising one or more organic or aqueous solvents, and optionally of one or more electron-conducting additive(s) and/or binder(s); and
(ii) depositing said mixture from step (i) by coating or by a printing technique on a base substrate, in particular said base substrate being a polymer film of polyethylene or polypropylene type, said process comprising a subsequent step (iii) of detaching said polymer film, in order to form a self-supported electrode.

18. A process for preparing an electrode as defined in claim 16, comprising the formation of said polymer by *in situ* electropolymerization on a current collector of monomers bearing at least one group possessing at least one nitroxide function in NO' radical form, said monomers being selected from the family of fluorenes, carbazoles, anilines, phenylenes, isothionaphthenes, acetylenes and phenylene vinylenes and mixtures thereof.

19. A lithium secondary battery comprising an electrode as claimed in claim 16, said battery being in particular a lithium-ion, lithium-polymer, lithium-sulfur, lithium-air or supercapacitor battery, in particular a lithium-ion battery.
